# EUROPÄISCHE PATENTANMELDUNG

(11) **EP 4 342 727 A1**
(43) Veröffentlichungstag der Anmeldung: **27.03.2024**
(21) Anmeldenummer: 23198590.4
(22) Anmeldetag: 20.09.2023
(51) Int. Cl.: B60N 2/07, B60P 3/32, B60N 2/015

(54) **FREIZEITFAHRZEUG MIT EINEM FUSSBODEN**

(30) Priorität: 20.09.2022 DE 102022124151
(71) Anmelder: Bürstner GmbH & CO. KG, 77694 Kehl (DE)
(72) Erfinder: Späth, Stefan, 77704 Oberkirch (DE); Huschle, Timo, 77767 Appenweier (DE)
(74) Vertreter: Müller Schupfner & Partner Patent- und Rechtsanwaltspartnerschaft mbB

(57) **Zusammenfassung**

Fußboden (2), insbesondere integrierter Fußboden, für Freizeitfahrzeuge (1), insbesondere für Wohnmobile, mit einer Schienenanordnung (10), die eine erste Schiene (11) und zumindest eine zweite Schiene (12) umfasst, wobei die Schienenanordnung (10) so ausgestaltet ist, dass im eingebauten Zustand zumindest ein Fahrzeugsitz (13) an der ersten Schiene (11) und der zweiten Schiene (12) montierbar ist. Vorgeschlagen wird, dass die erste Schiene (11) zumindest im Wesentlichen durch ein erstes Schienenprofil (15) gebildet ist, dass die zweite Schiene (12) zumindest im Wesentlichen durch ein zweites Schienenprofil (16) gebildet ist, dass das erste Schienenprofil (15) und das zweite Schienenprofil (16) getrennt voneinander ausgebildet sind und dass ein Aufnahmekörper (17) vorgesehen ist, der das erste Schienenprofil (15) und das zweite Schienenprofil (16) der Schienenanordnung (10) aufnimmt. Ferner ist ein Freizeitfahrzeug, insbesondere Wohnmobil und/oder Campervan, mit zumindest einem solchen Fußboden angegeben.

## Beschreibung

Die Erfindung betrifft ein Freizeitfahrzeug, insbesondere ein Wohnmobil, mit einem Fußboden, an dem eine Schienenanordnung vorgesehen ist, um einen Fahrzeugsitz zu befestigen. Hierbei betrifft die Erfindung vorzugsweise eine Ausgestaltung, bei der solch ein Fahrzeugsitz von einem Benutzer auf einfache Weise ein- und ausgebaut werden kann, um eine variable Nutzung des Freizeitfahrzeugs zu ermöglichen. Insbesondere betrifft die Erfindung einen Campervan der auch auf eine Nutzung im Alltag anpassbar ist. Beispielsweise kann hierfür zumindest ein Teil der zum Campen dienenden Einrichtungen, wie ein Bett, ausbaubar sein und durch den Einbau von Sitzen eine Nutzung im Alltag zur Beförderung von Personen ermöglicht werden, so dass der Nutzwert des Campervans erheblich verbessert ist. Außerdem kann dann beispielsweise ein Sitz oder eine Sitzbank eingebaut und verstellt werden.

Aus der DE 11 2017 001 207 T5 ist ein Kleinbus bekannt. Hierbei ist bekannt, dass die Sitze der zweiten Reihe eines Kleinbusses aus dem Motorfahrzeug entfernbar sein können. Ferner ist ein Schienen- und Trägersystem für erste und zweite entfernbare Sitze bekannt, das eine erste untere Schiene, die fest an einem Boden des Motorfahrzeugs befestigt und seitlich entlang diesem positioniert ist, eine erste obere Schiene, die mit der ersten unteren Schiene ineinander gesteckt ist und in dieser seitlich verschiebbar ist und eine zweite obere Schiene aufweist, die mit der ersten unteren Schiene ineinander gesteckt ist und in dieser seitlich verschiebbar ist. Ferner sind eine zweite untere Schiene, die seitlich entlang des Bodens des Motorfahrzeugs parallel zu der ersten unteren Schiene und längs hinter der ersten unteren Schiene positioniert ist, eine dritte obere Schiene, die mit der zweiten unteren Schiene ineinander gesteckt ist und in dieser seitlich verschiebbar ist, eine vierte obere Schiene, die mit der zweiten unteren Schiene ineinander gesteckt ist und in dieser seitlich verschiebbar ist, erste und zweite Querriegel, die seitlich beabstandet sind und senkrecht zu den ersten und dritten oberen Schienen angeordnet sind, wobei die ersten und zweiten Querriegel mit den ersten und dritten oberen Schienen verbunden sind, dritte und vierte Querriegel, die seitlich beabstandet sind, die senkrecht zu den zweiten und vierten oberen Schienen angeordnet sind, wobei die dritten und vierten Querriegel mit den zweiten und vierten oberen Schienen verbunden sind, eine erste Abdeckung, die mit den ersten und zweiten Querriegeln verbunden ist und sich zwischen diesen erstreckt, und eine zweite Abdeckung vorgesehen, die mit den dritten und vierten Querriegeln verbunden ist und sich zwischen diesen erstreckt.

Der aus der DE 11 2017 001 207 T5 bekannte Kleinbus und das bekannte Schienen- und Trägersystem haben den Nachteil, dass der Aufbau aufwändig ist. Das Schienen- und Trägersystem besteht aus einer Vielzahl von Elementen, die im Kleinbus montiert werden müssen. Dadurch ist auch die Montage aufwändig. Ferner ergibt sich eine Erhöhung des Leergewichts, was sich ungünstig auf die mögliche Zuladung auswirkt.

Aufgabe der Erfindung ist es, einen Fußboden für ein Freizeitfahrzeug, insbesondere für ein Wohnmobil und/oder einen Campervan, und ein Freizeitfahrzeug mit einem Fußboden anzugeben, die verbessert ausgestaltet sind.

Die Aufgabe wird durch einen Fußboden mit den Merkmalen des unabhängigen Patentanspruchs 1 und durch ein Freizeitfahrzeug mit den Merkmalen des Patentanspruchs 10 gelöst. Vorteilhafte Weiterbildung der Erfindung sind in den Unteransprüchen angegeben.

Die Aufgabe wird durch einen Fußboden, insbesondere integrierter Fußboden, für Freizeitfahrzeuge, insbesondere für Wohnmobile, mit einer Schienenanordnung, die eine erste Schiene und zumindest eine zweite Schiene umfasst, gelöst, wobei die Schienenanordnung so ausgestaltet ist, dass im eingebauten Zustand zumindest ein Fahrzeugsitz an der ersten Schiene und der zweiten Schiene montierbar ist, wobei die erste Schiene zumindest im Wesentlichen durch ein erstes Schienenprofil gebildet ist, wobei die zweite Schiene zumindest im Wesentlichen durch ein zweites Schienenprofil gebildet ist, wobei das erste Schienenprofil und das zweite Schienenprofil getrennt voneinander ausgebildet sind und wobei ein Aufnahmekörper vorgesehen ist, der das erste Schienenprofil und das zweite Schienenprofil der Schienenanordnung aufnimmt.

Ferner wird die Aufgabe durch ein Freizeitfahrzeug, insbesondere ein Wohnmobil und/oder einen Campervan, mit zumindest einem solchen Fußboden gelöst.

Im Unterschied zu einer denkbaren Ausgestaltung, bei der die erste Schiene und die zweite Schiene in einem einzigen Profil realisiert sind, sind die erste Schiene und die zweite Schiene der erfindungsgemäßen Ausgestaltung jeweils zumindest im Wesentlichen durch Schienenprofile gebildet, die voneinander getrennt sind. Dadurch verringert sich der Materialbedarf, was insbesondere bei einer Ausgestaltung aus einem Aluminium oder einer Aluminiumlegierung die Materialkosten verringert. Ferner können gegebenenfalls standartisierte oder zumindest einfach herzustellende Profile anstelle eines komplexen Profils, an dem zwei Schienen ausgebildet sind, eingesetzt werden, was den Kreis der möglichen Hersteller vergrößert und die Abhängigkeit von einem speziellen Lieferanten verringert.

Außerdem kann sich der Vorteil ergeben, dass anstelle einer vielteiligen Ausgestaltung, die eine aufwändige und zeitintensive Fertigungsmontage erfordert, ein Zwischenprodukt erstellt und vorzugsweise als ein einziges Teil oder gegebenenfalls mit einer geringen Anzahl an Montagestoffen und/oder Montageteilen eingebaut und im Freizeitfahrzeug befestigt werden kann.

Vorteilhaft ist es, dass der Aufnahmekörper zumindest ein Metallelement aufweist und dass das erste Schienenprofil und das zweite Schienenprofil zumindest mittelbar mit dem zumindest einen Metallelement verbunden sind. Speziell kann hierbei für jedes Schienenprofil zumindest ein Metallelement vorgesehen sein. Besonders bevorzugt ist aber ein gemeinsames Metallelement. Die Schienenprofile sind also nicht notwendigerweise direkt über solch ein Metallelement miteinander verbunden. Die Metallelemente ermöglichen eine hohe Belastbarkeit der Schienenprofile und Verhindern insbesondere ein Ausreißen von Befestigungsmitteln.

Vorteilhaft ist es, dass zumindest ein Befestigungsmittel, insbesondere zumindest eine Befestigungsschraube, vorgesehen ist, mittels der das erste Schienenprofil mit dem zumindest einen Metallelement, insbesondere einem ersten Metallelement oder einem gemeinsamen Metallelement, verbunden ist und/oder dass zumindest ein Befestigungsmittel, insbesondere zumindest eine Befestigungsschraube, vorgesehen ist, mittels der das zweite Schienenprofil mit dem zumindest einen Metallelement, insbesondere einem zweiten Metallelement oder dem gemeinsamen Metallelement, verbunden ist. Hierdurch kann eine hoch belastbare Befestigung von Fahrzeugsitzen ermöglicht werden.

Vorteilhaft ist es, dass das zumindest eine Metallelement als Metalllage in den Aufnahmekörper eingelegt ist und/oder dass das zumindest eine Metallelement in den Aufnahmekörper verpresst ist und/oder dass das zumindest eine Metallelement auf einem Aluminium oder einer Aluminiumlegierung basiert. Dadurch ergeben sich Gewichtsvorteile, die sich vorteilhaft auf die mögliche Zuladung auswirken.

Vorteilhaft ist es, dass zumindest ein Metalleinleger, der vorzugsweise aus einem Aluminium oder einer Aluminiumlegierung basiert, vorgesehen ist, der zumindest teilweise in den Aufnahmekörper eingelegt und/oder an eine Unterseite des Aufnahmekörpers angelegt ist und der sich zumindest näherungsweise parallel zu den Schienenprofilen erstreckt. Hierdurch kann ein Ausgleich einer Sickenhöhe eines Chassis erfolgen. Ferner kann zusätzlich oder alternativ eine Verstärkung erzielt werden.

Vorteilhaft ist es, dass der Aufnahmekörper zumindest eine Laufplatte aufweist, die vorzugsweise zumindest teilweise aus einer Sperrholzplatte gebildet ist. Hierdurch kann ein Laufboden realisiert werden, der beispielsweise bei ausgebauten Fahrzeugsitzen genutzt werden kann.

Vorteilhaft ist es, dass eine Oberseite der Laufplatte mit einer Kunststoffschicht versehen ist, die vorzugsweise zumindest im Wesentlichen aus Polyvinylchlorid gebildet ist. Hierdurch kann eine ästhetische und belastbare Deckschicht realisiert werden.

Vorteilhaft ist es, dass der Aufnahmekörper eine Füllschicht aufweist, die vorzugsweise zumindest im Wesentlichen aus einem extrudiertes Polystyrol gebildet ist, wobei die Füllschicht vorzugsweise zwischen einer Laufplatte des Aufnahmekörpers und zumindest einem Metallelement oder einem Gießschaum angeordnet ist. Hierdurch kann eine Ausgestaltung als Leichtbauteil, insbesondere Leichtbauplatte, ermöglicht werden.

Vorteilhaft ist es, dass ein Gießschaum vorgesehen ist der flächig zwischen einem Chassisboden, insbesondere Ladeboden, eines Basisfahrzeugs und dem Aufnahmekörper des Fußbodens verteilt ist. Hierdurch kann zum einen ein Höhenausgleich realisiert werden. Beispielsweise kann ein Campervan auf einem Basisfahrzeug basieren, das ein Kleintransporter ist. Bei einem Kleintransporter ist dann die Ladefläche in der Regel mit großen Toleranzen ausgebildet. Der Gießschaum gleicht solche Toleranzen aus. Zum anderen können eine Befestigung und Belastbarkeit des Laufbodens und die Befestigung des Fahrzeugsitzes verbessert werden.

Weitere Vorteile und Einzelheiten der Erfindung werden anhand des in den schematischen Figuren dargestellten Ausführungsbeispiels näher erläutert. Hierbei zeigen:
- Fig. 1: ein Freizeitfahrzeug mit einem Fußboden entsprechend einem Ausführungsbeispiel in einer teilweise geöffneten, schematischen Darstellung, wobei eine Ansicht von der Seite dargestellt ist; und
- Fig. 2: eine auszugsweise, schematische Schnittdarstellung des Fußbodens des in Fig. 1 gezeigten Freizeitfahrzeugs entlang der mit II bezeichneten Schnittlinie.

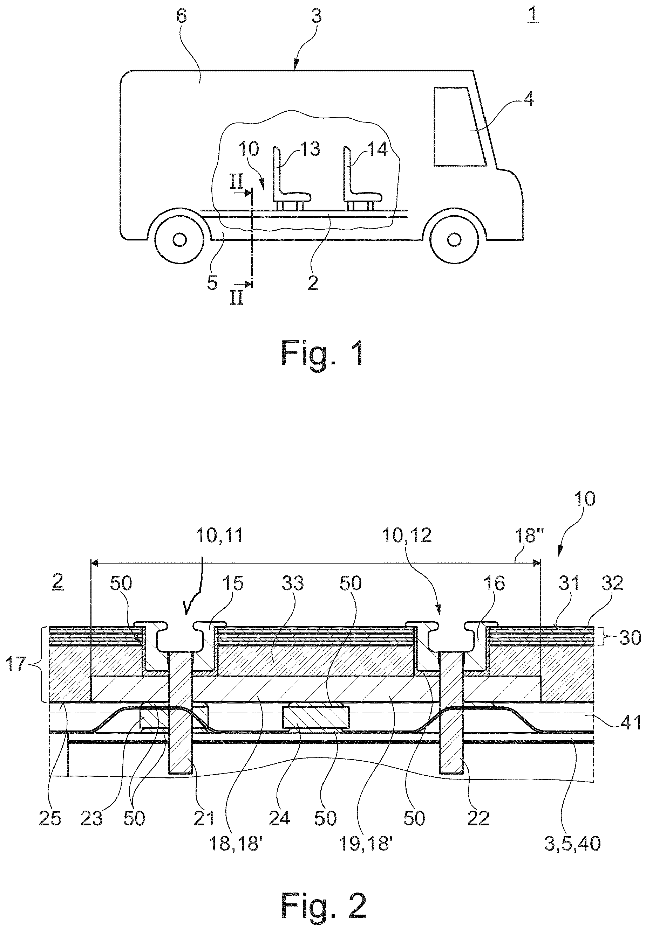

Fig. 1 zeigt ein Freizeitfahrzeug 1 mit einem Fußboden 2 entsprechend einem Ausführungsbeispiel in einer teilweise geöffneten, schematischen Darstellung, wobei eine Ansicht von der Seite dargestellt ist. Das Freizeitfahrzeug 1 kann insbesondere als Wohnmobil ausgestaltet sein. Besonders bevorzugt ist das Freizeitfahrzeug 1 als Campervan ausgebildet. Die Fußboden 2 eignet sich insbesondere für solche Freizeitfahrzeuge 1.

Das Freizeitfahrzeug 1 kann auf einem Basisfahrzeug 3 basieren. Als Basisfahrzeug 3 dient in diesem Ausführungsbeispiel ein Kleintransporter. Dadurch kann das Freizeitfahrzeug 1 mit reduziertem Herstellungsaufwand hergestellt werden. Um die Herstellungskosten zu optimieren, können hierbei ein Fahrerhaus 4, ein Chassis (Fahrwerk) 5 und eine ein über dem Chassis 5 aufgebaute Hülle 6 des Basisfahrzeugs zumindest in modifizierter Form übernommen werden. Als Modifikationen können beispielsweise ein Dachausschnitt und eine modifizierte Seitentür sowie Ausschnitte in den Hecktüren oder einer Heckklappe und/oder in der Hülle, die für Fenster dienen, realisiert werden.

Der Fußboden 2 ist in diesem Ausführungsbeispiel als integrierter Fußboden ausgebildet, der in das Freizeitfahrzeuge 1 fest integriert ist. Hierbei ist die Ausgestaltung insbesondere so realisiert, dass keine einfache Demontage von Bauteilen möglich ist. Außerdem kann der Fußboden 2 als Baugruppe beziehungsweise Zwischenprodukt vorgefertigt und dann im Wesentlichen einstückig in das Basisfahrzeug 3 eingebaut werden.

Fig. 2 zeigt eine auszugsweise, schematische Schnittdarstellung des Fußbodens 2 des in Fig. 1 gezeigten Freizeitfahrzeugs 1 entlang der mit II bezeichneten Schnittlinie. Der Fußboden 2 weist eine Schienenanordnung 10 auf, die eine erste Schiene 11 und eine zweite Schiene 12 umfasst. Hierbei können noch weitere Schienen vorgesehen sein. Exemplarisch sind Fahrzeugsitze 13, 14 an der Schienenanordnung befestigt. Die Schienenanordnung 10 kann so ausgestaltet sein, dass insbesondere zwei oder drei Fahrzeugsitze 13, 14 auch nebeneinander angeordnet werden können. Die Fahrzeugsitze 13, 14 sind hierbei vorzugsweise von einem Benutzer montierbar und auch demontierbar.

Die erste Schiene 11 ist zumindest im Wesentlichen durch ein erstes Schienenprofil 15 gebildet. Die zweite Schiene 12 ist zumindest im Wesentlichen durch ein zweites Schienenprofil 16 gebildet. Die Schienenprofile 15, 16 können hierbei noch mit Begrenzungselementen versehen sein. Ferner können die Schienenprofile 15, 16 zumindest teilweise beschichtet, insbesondere lackiert, sein. Das erste Schienenprofil 15 und das zweite Schienenprofil 16 sind getrennt voneinander ausgebildet. Dadurch kann der Materialeinsatz optimiert werden.

Der Fußboden 2 weist einen Aufnahmekörper 17 auf, der in diesem Ausführungsbeispiel aus mehreren Komponenten aufgebaut ist. Der Aufnahmekörper 17 dient zum Aufnehmen des ersten Schienenprofils 15 und des zweiten Schienenprofils 16 der Schienenanordnung 10. Ferner kann der Aufnahmekörper 17, der in Fig. 2 nur auszugsweise und schematisch dargestellt ist, in entsprechender Weise noch weitere Schienen aufnehmen, so dass mehrere Fahrzeugsitze 13, 14 beispielsweise nebeneinander angeordnet werden können. Ferner kann noch eine weitere Schiene vorgesehen sein, die beispielsweise für ein Tischbein dient. Bei einer abgewandelten Ausgestaltung ist es aber auch möglich, dass der Fußboden 2 durch Segmente aufgebaut ist, die jeweils einen Aufnahmekörper 17 und beispielsweise jeweils zwei Schienenprofile 15, 16 umfassen. Vorzugsweise weist der Fußboden 2 aber genau einen Aufnahmekörper 17 auf.

Der Aufnahmekörper 17 weist ein erstes Metallelement 18 und ein zweites Metallelement 19 auf. Das erste Schienenprofil 15 und das zweite Schienenprofil 16 sind jeweils mittelbar mit einem der Metallelemente 18, 19 verbunden. Hierfür sind Befestigungsmittel 21 22 vorgesehen, die in diesem Ausführungsbeispiel als Befestigungsschrauben 21, 22 ausgebildet sind. Insbesondere können die Befestigungsmittel 21, 22 als Hammerkopfschrauben 21, 22 ausgebildet sein. Die Metallelemente 18, 19 sind als Metalllagen ausgebildet und in der Einbausituation am Fahrzeug horizontal nebeneinander in den Aufnahmekörper 17 eingelegt. Hierbei können die die Metallelement 18, 19 in den Aufnahmekörper 17 verpresst sein. Somit ergibt sich eine sehr belastbare Ausgestaltung. Insbesondere um ein Gewicht zu optimieren, basieren die Metallelemente 18, 19 auf einem Aluminium oder einer Aluminiumlegierung. Hierbei können die Metallelemente beschichtet, insbesondere lackiert, sein.

Bei einer abgewandelten Ausgestaltung kann anstelle der beiden Metallelemente 18, 19 auch ein einziges Metallelement 18' vorgesehen sein, das geometrisch die beiden Metallelemente 18, 19 umfasst, wie es durch den Doppelpfeil 18" veranschaulicht ist. Das Metallelement 18' dient dann als gemeinsames Metallelement 18'. Hierdurch kann die Stabilität weiter verbessert werden. Die Metallelemente 18, 19 beziehungsweise das Metallelement 18' sind vorzugsweise aus einem Vollmaterial gebildet und in den als Sandwichboden ausgebildeten Fußboden 2 eingepresst.

Ferner sind Metalleinleger 23, 24 vorgesehen, die in diesem Ausführungsbeispiel auf einem Aluminium oder einer Aluminiumlegierung basieren. Der Metalleinleger 23 ist teilweise in den Aufnahmekörper 17 eingelegt und teilweise an eine Unterseite 25 des Aufnahmekörpers 17 angelegt. Der Metalleinleger 24 ist in den Aufnahmekörper 17 eingelegt. Die Metalleinleger sind so angeordnet, dass diese sich zumindest näherungsweise parallel zu den Schienenprofilen 15, 16 erstrecken. In diesem Ausführungsbeispiel sind zwei Metalleinleger 23, 24 vorgesehen. Die Metalleinleger 21, 22 sind vorzugsweise aus einem Vollmaterial gebildet.

Der Aufnahmekörper 17 weist eine Laufplatte 30 auf, die aus einer Sperrholzplatte gebildet ist. An der Oberseite 31 der Laufplatte 30 ist eine Kunststoffschicht 32 vorgesehen, die zumindest im Wesentlichen aus Polyvinylchlorid (PVC) gebildet ist. Außerdem weist der Aufnahmekörper 17 eine Füllschicht 33 auf, die zumindest im Wesentlichen aus einem extrudiertes Polystyrol (XPS) gebildet ist.

Das Freizeitfahrzeug 1 weist einen Chassisboden 40 auf. Der Chassisboden 40 kann Teil des Chassis 5 oder mit dem Chassis 5 verbunden sein. Vorzugsweise ist der Chassisboden 40 Bestandteil des Basisfahrzeugs 3. Insbesondere kann bei einem Basisfahrzeug 3, das ein Kleintransporter oder dergleichen ist, der Chassisboden 40 durch einen Ladeboden des Basisfahrzeugs 3 gebildet sein. Der Ladeboden kann hierbei sehr unregelmäßig beziehungsweise mit großen Toleranzen ausgestaltet sein, da dieser bei dem Kleintransporter oder dergleichen nur zum Transport von Gütern dient.

Zur Montage des Aufnahmekörpers 17 mit der Schienenanordnung 10 kann zunächst ein Gießschaum 41 großflächig auf den Chassisboden 40 aufgebracht werden. Dann kann der Aufnahmekörper 17 auf den Gießschaum 41 aufgesetzt und angepresst werden. Der Gießschaum 41 gleicht hierbei einen unregelmäßigen Aufbau des Chassisbodens 40 und Toleranzen aus. Hierbei kann der Aufnahmekörper 17 mit der Schienenanordnung 10 ein Bauteil zum Einbauen bilden, das vorgefertigt werden kann.

Somit kann die Vormontage außerhalb des Freizeitfahrzeugs 1 erfolgen. Hierbei können die Schienenprofile 15, 16 eingeklebt werden. Dann kann der Fußboden 2 in das Freizeitfahrzeug 1 eingebaut werden. Die Befestigungsmittel 21, 22 dienen vorzugsweise auch zum Befestigen am Chassisboden 40.

Bei einer abgewandelten Montage können die Schienenprofile 15, 16 auch eingebaut, insbesondere eingeklebt, werden, wenn der Aufnahmekörper 17 mittels des Gießschaums 41 auf dem Chassisboden 40 angeordnet ist.

Im montierten Zustand ist der Gießschaum 41 dann flächig zwischen dem Chassisboden 40 und dem Aufnahmekörper 17 des Fußbodens 2 verteilt. Die Füllschicht 33 ist dann zwischen der Laufplatte 30 des Aufnahmekörpers 17 und den Metallelementen 18, 19 beziehungsweise dem Gießschaum 41 angeordnet. Der Gießschaum 41 kann als Zwei-Komponenten-Gießschaum 41 ausgebildet sein.

Zum Einkleben der Schienenprofile 15, 16 in den Aufnahmekörper 17 kann ein Hochleistungsklebstoff 50, insbesondere ein Zwei-Komponenten-Methylmethacrylat (MMA), zum Einsatz kommen. Solch ein Hochleistungsklebstoff 50 kann auch zum Einkleben der Metalleinleger 23, 24 in den Aufnahmekörper 17 zum Einsatz kommen. Zwischen der Füllschicht 33 und den Metallelementen 18, 19 und ggf. auch an einer anderen Stelle kann ein doppelseitiges Klebeband eingesetzt werden.

Somit kann eine Kosteneinsparung erzielt werden. Ferner wird eine einfachere Handhabung bei der Montage ermöglicht, da eine einstückige Ausgestaltung des Fußbodens 2 durch eine Vorfertigung möglich ist. Ferner kann bei einer möglichen Bandmontage des Freizeitfahrzeugs 1 Montagezeit eingespart werden.

Die Erfindung ist nicht auf die beschriebenen Ausführungsformen beschränkt.

## Patentansprüche

1. Fußboden (2), insbesondere integrierter Fußboden, für Freizeitfahrzeuge (1), insbesondere für Wohnmobile, mit einer Schienenanordnung (10), die eine erste Schiene (11) und zumindest eine zweite Schiene (12) umfasst, wobei die Schienenanordnung (10) so ausgestaltet ist, dass im eingebauten Zustand zumindest ein Fahrzeugsitz (13) an der ersten Schiene (11) und der zweiten Schiene (12) montierbar ist,
**dadurch gekennzeichnet,**
**dass** die erste Schiene (11) zumindest im Wesentlichen durch ein erstes Schienenprofil (15) gebildet ist, dass die zweite Schiene (12) zumindest im Wesentlichen durch ein zweites Schienenprofil (16) gebildet ist, dass das erste Schienenprofil (15) und das zweite Schienenprofil (16) getrennt voneinander ausgebildet sind und dass ein Aufnahmekörper (17) vorgesehen ist, der das erste Schienenprofil (15) und das zweite Schienenprofil (16) der Schienenanordnung (10) aufnimmt.

2. Fußboden nach Anspruch 1,
**dadurch gekennzeichnet,**
**dass** der Aufnahmekörper (17) zumindest ein Metallelement (18, 19) aufweist und dass das erste Schienenprofil (15) und das zweite Schienenprofil (16) zumindest mittelbar mit dem zumindest einen Metallelement (18, 19) verbunden sind.

3. Fußboden nach Anspruch 2,
**dadurch gekennzeichnet,**
**dass** zumindest ein Befestigungsmittel (21), insbesondere zumindest eine Befestigungsschraube, vorgesehen ist, mittels der das erste Schienenprofil (15) mit dem zumindest einen Metallelement (18), insbesondere einem ersten Metallelement (18) oder einem gemeinsamen Metallelement (18`), verbunden ist und/oder dass zumindest ein Befestigungsmittel (22), insbesondere zumindest eine Befestigungsschraube, vorgesehen ist, mittels der das zweite Schienenprofil (16) mit dem zumindest einen Metallelement (19), insbesondere einem zweiten Metallelement (19) oder dem gemeinsamen Metallelement (18`), verbunden ist.

4. Fußboden nach Anspruch 3,
**dadurch gekennzeichnet,**
**dass** das zumindest eine Metallelement (18, 19) als Metalllage in den Aufnahmekörper (17) eingelegt ist und/oder dass das zumindest eine Metallelement (18, 19) in den Aufnahmekörper (17) verpresst ist und/oder dass das zumindest eine Metallelement (18, 19) auf einem Aluminium oder einer Aluminiumlegierung basiert.

5. Fußboden nach einem der Ansprüche 1 bis 4,
**dadurch gekennzeichnet,**
**dass** zumindest ein Metalleinleger (23, 24), der vorzugsweise auf einem Aluminium oder einer Aluminiumlegierung basiert, vorgesehen ist, der zumindest teilweise in den Aufnahmekörper (17) eingelegt und/oder an eine Unterseite (25) des Aufnahmekörpers (17) angelegt ist und der sich zumindest näherungsweise parallel zu den Schienenprofilen (15, 16) erstreckt.

6. Fußboden nach einem der Ansprüche 1 bis 5,
**dadurch gekennzeichnet,**
**dass** der Aufnahmekörper (17) zumindest eine Laufplatte (30) aufweist, die vorzugsweise zumindest teilweise aus einer Sperrholzplatte gebildet ist.

7. Fußboden nach Anspruch 6,
**dadurch gekennzeichnet,**
**dass** eine Oberseite (31) der Laufplatte (30) mit einer Kunststoffschicht (32) versehen ist, die vorzugsweise zumindest im Wesentlichen aus Polyvinylchlorid gebildet ist.

8. Fußboden nach einem der Ansprüche 1 bis 7,
**dadurch gekennzeichnet,**
**dass** der Aufnahmekörper (17) eine Füllschicht (33) aufweist, die vorzugsweise zumindest im Wesentlichen aus einem extrudiertes Polystyrol gebildet ist, wobei die Füllschicht (33) vorzugsweise zwischen einer Laufplatte (30) des Aufnahmekörpers (17) und zumindest einem Metallelement (18, 19) oder einem Gießschaum (41) angeordnet ist.

9. Freizeitfahrzeug, insbesondere Wohnmobil und/oder Campervan, mit zumindest einem Fußboden, der nach einem der Ansprüche 1 bis 8 ausgebildet ist.

10. Freizeitfahrzeug nach Anspruch 9,
**dadurch gekennzeichnet,**
**dass** ein Gießschaum (41) vorgesehen ist der flächig zwischen einem Chassisboden (40), insbesondere Ladeboden, eines Basisfahrzeugs (3) und dem Aufnahmekörper (17) des Fußbodens (2) verteilt ist.
